# EUROPEAN PATENT APPLICATION

(11) **EP 4 549 313 A1**
(43) Date of publication of application: **07.05.2025**
(21) Application number: 24209822.6
(22) Date of filing: 30.10.2024
(51) Int. Cl.: B64C 3/00, B64C 3/18, B64C 3/34, B64F 5/10

(54) **MODULAR WING PORTIONS, WING ASSEMBLIES AND METHODS OF ASSEMBLING THE SAME**

(30) Priority: 31.10.2023 GB 202316651
(71) Applicant: Airbus Operations Limited, Bristol BS34 7PA (GB)
(72) Inventor: DINGLE, Stephen, Bristol, BS34 7PA (GB); FERNANDEZ RODRIGUEZ, Cristian, BS34 7PA Bristol (ES); ROBERTS, Andrew, Bristol, BS34 7PA (GB); OGDEN, Nathan, Chester, CH1 4NP (GB); MALTBY, Richard, Bristol, BS34 7QW (GB)
(74) Representative: Abel & Imray LLP

(57) **Abstract**

The present disclosure concerns a modular wing portion (390) for installation into a wing assembly (503) as a pre-assembled unit, the modular wing portion comprising at least one rib (300) and at least one internal fuel tank system component (340), and a cartridge jig (101) for the assembly of said modular wing portion (390) away from an aircraft wing 501, the cartridge jig (101) comprising a plurality of secondary support members, each secondary support member configured to receive and support a rib (300) such that a fuel system component (340) can be installed to the rib. Associated aircraft (500) and wings (501), transport frames (600) and methods of assembly are also disclosed.

## Description

### BACKGROUND OF THE INVENTION

The present invention concerns modular wing portions and related subject matter. More particularly, but not exclusively, this invention concerns modular wing portions for installation into a wing assembly as a pre-assembled unit, wing assemblies to receive the modular wing portion, cartridge jigs for assembly of modular wing portions, transport assemblies configured for installation of the modular wing portion, methods of assembling and installing a modular wing portions, and wings and aircraft comprising modular wing portions.

Aircraft wings can be provided with fuel system components, such as fuel lines or hydraulics, that extend across and through multiple ribs of a wing structure. The wing is assembled with the ribs received between the bottom and top covers of the wing and the fuel system components are subsequently installed in the wing.

Installation of fuel tank systems is performed through the manholes located at the lower cover after the wing box of the wing is completely assembled, including covers and spars.

Several attempts have been made to improve the efficiency in manufacturing of wing boxes by attaching at least some of the fuel system components to at least one of the ribs prior to joining the ribs together. An example is the system disclosed in GB201214575A (Airbus Operations Limited). GB201214575A discloses installing a rib into a wing box, and thereafter attaching a fuel system component to that rib, before installing a second rib. By installing the fuel system components in such a sequence, the wing box structure is built and the ease with which the fuel system components are installed into a wing box is somewhat improved.

GB2575841A (Airbus Operations Limited) discloses installing adapted ribs into the wing such that a relatively long fluid conduit line can be fitted that passes through the plane of several ribs. This improves the ease of installation of fuel system components into the wing box.

The above processes remain relatively slow and can result in a congested main wing assembly flow line. Furthermore, the installing fuel system components in situ into a wing causes operational constraints and raises ergonomic challenges for operators that assemble wing boxes because the known methods of manufacturing wings discussed above can require operators to work assembling wings with their arms raised above their heads, as they are fitting the fuel system components while working underneath a wing box.

The present invention seeks to mitigate or overcome one or more of the above-mentioned problems. Alternatively, or additionally, the present invention seeks to provide an improved aircraft assembly jig and an improved method of installing components at an aircraft.

### SUMMARY OF THE INVENTION

According to a first aspect of the present invention, there is provided a modular wing portion for installation into a wing assembly as a pre-assembled unit, the modular wing portion comprising at least one rib and at least one internal fuel tank system component.

The modular wing portion may correspond to a section of an aircraft wing. By this, what is meant is that the modular wing portion may be arranged to form part of a desired zone volume of an aircraft wing. It may be that the at least one internal fuel tank system component includes a majority (i.e., over 50% as judged by volume occupied or by mass, for example) of the fuel tank system components that need to be installed into a chordwise section or desired volume of a finished aircraft wing. It may be that the at least one internal fuel tank system component includes over 70% of the fuel tank system components that need to be installed into a chordwise section or desired volume of a finished aircraft wing. It may be that the at least one internal fuel tank system component includes substantially all of the fuel tank system components that need to be installed into a chordwise section or desired volume of a finished aircraft wing. By increasing the number of fuel system components that are present in the modular wing portion, the time taken directly installing fuel system components to the wing at the main wing assembly station is reduced.

The modular wing portion is assembled as a pre-assembled unit. The modular wing portion being assembled as a pre-assembled unit allows the modular wing portion to be assembled offsite, away from the main production assembly line of the wing. This allows manufacturing processes to be improved/optimised, as the main assembly line of the wing may, in known prior art systems, be a rate limiting step during production, and moving production away from the main assembly line of the wing can improve the speed of manufacture of the wing. Another advantage is that by assembling the fuel system components and ribs offsite, the ergonomic environment of the operator is improved compared to if the operator were installing the ribs and at least one fuel component on the wing itself. For example, this arrangement allows the operator to perform systems installation of ribs and fuel system components in an offline station (by "offline station" what is meant is a location distal from an aircraft wing and/or distal from an aircraft wing final assembly line), with full access and possibility to work at an optimised height such that the ergonomic of installation for the operator is improved. By moving the installation of ribs and fuel system components to an offline station, the installation of the fuel system components and ribs is removed from the critical flow path of the final assembly line. The pre-assembled unit may be configured to be installed as a single piece.

The at least one internal fuel tank system component and at least one rib may be configured to be spatially fixed relative to each other such that:
a. when the at least one rib is installed into the wing assembly, the at least one fuel tank system component is installed into wing assembly, and
b. when the at least one fuel tank system component is installed, the at least one rib is installed into the wing assembly.

The at least one rib and at least one fuel tank system component may be interconnected to permit operational testing of the arrangement at a location remote from the aircraft wing. The modular wing portion may be configured for connection to other modular wing portions, for example modular wing portions located in positions adjacent to the modular wing portion in the wing assembly. The modular wing portion may comprise a systems interface for connecting to a systems interface of the wing assembly and/or of adjacent modular wing portions. The modular wing portion may comprise a structural interface for connecting to a structural interface of the wing structure and/or of adjacent module(s). The modular wing portion may comprise mounting portions for mounting to a transport assembly which can carry the module. The mounting points may be retractable nipples or fast-closing clamps of a zero-point clamping system. The at least one fuel tank system component may be (or comprise one or more of) a fuel pipe, connector, sensor or harness. The at least one fuel tank system component may be an elongate and rigid fuel conduit, such as an elongate (fuel) pipe.

Each rib of the at least one rib may have a planar surface defining a rib plane being bounded by an outer rib boundary, wherein the at least one internal fuel tank system component passes through the rib plane. The at least one fuel system component may pass through and/or be mounted to the rib at a location through the rib plane and entirely within the outer rib boundary.

Optionally, the at least one rib comprises two or more ribs, wherein the least one internal fuel tank system component passes through the rib plane and through the planar surface of each of the at least two ribs. Optionally the fuel system component may pass through at least three ribs.

The modular wing portion may have a length (corresponding to a longitudinal axis) and a width (corresponding to an axis orthogonal and transverse to the longitudinal axis). The one or more ribs may be a plurality of ribs distributed along the length of the modular wing portion. The one or more ribs may be movable along the length of the modular wing portion via a mounting to an adjustment mechanism. The adjustment mechanism may comprise one or more rails mounted parallel to a length of the modular wing portion. The one or more rails may be mounted to an outer perimeter of the length of the cartridge jig. The one or more ribs may be mounted between two rails. The one or more ribs may be mounted between two rails such that a first end of one or more ribs is mounted to a first rail and a second, opposite, end of the one or more ribs is mounted to a second rail. The length at which the first end of one or more ribs is located along the length of the modular wing portion may be different to the length at which the second end of said rib is located along the length of the modular wing portion.

Each rib may have a length (corresponding to a longitudinal axis of said rib), wherein the length of each rib is traversed to the length of the modular wing portion. The (axis corresponding to the) length of each rib may be substantially orthogonal and/or transverse to the length of the modular wing portion. The (axis corresponding to the) length of each rib may have an orientation of between 70° and 110° relative to the length of the modular wing portion.

Each rib may have a width. The width of each rib may be substantially parallel to the width of the modular wing portion. Each rib may have a depth. The depth of each rib may be substantially perpendicular to both the width of the modular wing portion and the length of the modular wing portion.

The modular wing portion may further comprise a removable cartridge jig. The removable cartridge jig may be configured to guide assembly and installation of the modular wing portion. The at least one rib and at least one internal fuel tank system component are removably mounted to the removable cartridge jig.

The removable cartridge jig may comprise a connection interface adapted to connect and align the cartridge jig in a predetermined position relative to a wing assembly. The removable cartridge jig may comprise a systems interface for connecting to a systems interface of the wing structure and/or of adjacent modular wing portions(s). The removable cartridge jig may comprise a structural interface for connecting to the structural interface of the wing structure and/or of adjacent module(s). The removable cartridge jig may comprise a mounting portion for mounting to a transport assembly that can carry the module. The mounting portion may be (or comprise) retractable nipples and/or fast-closing clamps of a zero-point clamping system.

The removable cartridge jig may comprise an adjustment mechanism that allows the position of the one or more ribs to be adjusted in position along the length of the removable cartridge jig. The adjustment mechanism may comprise rails mounted substantially parallel to a length of the removable cartridge jig.

The one or more ribs may be removably mounted to the removable cartridge jig by a secondary support integrated into the removable cartridge jig. Each rib of the one or more ribs may be mounted to the secondary support member. A secondary support member advantageously provides structural support to the ribs which helps prevent deformation of the ribs during assembly.

The secondary support may be mounted to the adjustment mechanism. The adjustment mechanism may comprise one or more rails running parallel to the length of the cartridge jig. The secondary support may be mounted to the one or more rails of the adjustment mechanism. The adjustment mechanism may comprise a first rail and a second rail. The secondary support may be mounted between the first and second rails of the adjustment mechanism. A first mounting point of the secondary support may be movably mounted to the first rail and a second, opposite, mounting point of the secondary support may be movably mounted to the second rail. The first mounting point may be located at a first location of the secondary support, corresponding to a first distance along the length of the secondary support, corresponding to a first end of the secondary support. The second mounting point may be located at a second location of the secondary support, corresponding to a second end of the secondary support, the second end being at an opposite end of the secondary support to the first end.

The first mounting point may be uncoupled from the movement of the second mounting point, such that the first and second mounting points of a given secondary support may be located at different distances along the length of the cartridge jig. This allows a given secondary support to be angled relative to the width of the cartridge jig.

The secondary support may comprise a plurality of recessed and/or cut out regions in the rib plane such that a rib mounted on the secondary support has at least part of its surface exposed. This allows accessibility to the rib surfaces to allow fuel components to be fitted to the ribs.

The secondary support may comprise an upstand configured to support at least one rib attached to the secondary support. The upstand may be configured to abut the rib plane of a rib mounted to the secondary support. This may help prevent the ribs from deforming during assembly and installation of the modular wing portion.

The secondary support may comprise one or more linear actuators configured to align the at least one rib mounted to said secondary support. The one or more actuators may allow fine adjustments in the alignment of a rib mounted to the secondary support. The one or more actuators may be configured to align the rib mounted to the secondary support into a final position prior to installation into the wing assembly.

The secondary support structure may comprise a locating pin configured to align a secondary support structure mounted to the secondary support. The secondary support structure may comprise a suction cup configured to releasably hold a rib mounted to the secondary support. The suction cups allow for easy release of a rib from the secondary support to which it is mounted, such that the cartridge jig can be removed from the modular wing potion.

The secondary support may comprise one or more actuators, preferably linear actuators, configured to align the at least one rib mounted to said secondary support into a final position. The linear actuators may allow for movement of the secondary support structure across at least two axes. One of the at least two axes may be aligned with the width of the modular wing portion (and optionally the width of the cartridge jig). A first of the at least two axes may be substantially orthogonal with the length of the modular wing portion (and optionally the length of the cartridge jig) and a second of the at least two axes may be substantially orthogonal to the width and the length of the modular wing portion (and optionally the length and width of the cartridge jig).

The modular wing portion may further comprise a cover portion configured to cover the at least one rib. The cover portion may be part of an upper cover of an aircraft wing.

The modular wing portion comprises may comprise at least 5 ribs. The modular wing portion comprises may comprise at least 7 ribs. The modular wing portion may comprise at least 10 ribs. The modular wing portion may comprise at least 15 ribs. The modular wing portion may comprise at least 20 ribs. The modular wing portion may comprise fewer than 21 ribs.

According to a second aspect of the invention there is provided a wing assembly configured to receive the modular wing portion according to the first aspect of the invention. The wing assembly may be configured to receive at least two modular wing portions according to the first aspect of the invention, and optionally configured to receive at least four modular wing portions according to the first aspect of the invention. The wing assembly may be an aircraft jig, which (once all components are installed to the jig) forms part or all an aircraft wing. The wing assembly, once completed, may form a chordwise section of an aircraft wing. The wing assembly may comprise a systems interface for connecting to systems interface of adjacent structures or wing assemblies. The wing assembly may comprise a structural interface for connecting to the structural interface of adjacent structures or wing assemblies. The wing assembly may include an upper cover. The wing assembly may include a plurality of spars, and optionally all of the spars necessary for the chordwise section of an aircraft wing to which the wing assembly corresponds to. The wing assembly is pre-assembled before the modular wing portion is installed. This allows for rapid installation of the modular wing portion through, optionally, a single installation operation (e.g., raising the modular wing portion into the wing assembly) and thereafter drilling and bolting ribs to said upper cover and spars to secure the module to the wing assembly.

The wing assembly may further comprise a modular wing portion according to the first aspect of the present invention.

According to a third aspect of the present invention there is provided a cartridge jig for the assembly of a modular wing portion away from an aircraft wing assembly station, the cartridge jig comprising a plurality of secondary support members. Each secondary support member may be configured to receive and support a rib such that a fuel system component can be installed into said rib. In this way, the cartridge allows for fuel system components to be installed to a plurality of ribs, at a location remote from the main wing assembly station. The cartridge jig may have a length and width, and the plurality of support members may be configured to be arranged such that a rib mounted one of the plurality of support members has a length substantially aligned with the width of cartridge jig. The plurality of support members may be configured to be arranged such that the plurality of support members are distributed along the width of the cartridge jig.

The cartridge jig may include any of the features of the removable cartridge jig as described as part of the first aspect of the present invention. The cartridge jig may comprise a systems interface for connecting to systems interface of the wing structure and/or of adjacent module(s) and/or adjacent cartridge jigs. The cartridge jig may comprise a structural interface for connecting to the structural interface of the wing structure and/or of adjacent module(s) and/or adjacent cartridge jigs. The cartridge jig may comprise mounting portions for mounting to a transport assembly which can carry and transport the cartridge jig.

According to a fourth aspect of the invention there is provided a transport assembly configured for installation of the modular wing portion of the first aspect of the invention into the wing assembly of the second aspect of the invention, wherein the transport assembly comprises a plurality of mounting points for mounting a modular wing portion as claimed the first aspect of the invention or a cartridge jig according to the third aspect of the invention.

The transport assembly may comprise mounting points for mounting a cartridge jig and/or modular wing portion as previously described to the transport assembly. The mounting points may be part of a zero-point clamping system. The mounting points may be (or comprise) retractable nipples and/or fast-closing clamps of a zero-point clamping system. The transport assembly may comprise a latch configured to hold the ribs in a rotated position. As previously described, being able to hold the ribs in a rotated position may improve the ease with which fuel tank system components are installed. By having the transport assembly itself be able to rotate, a cartridge jig or modular wing portion mounted on the transport assembly does not need to be removed from the transport assembly before performing the rotation operation.

According to a fifth aspect of the invention there is provided a method of assembling a modular wing portion suitable for installation into a wing assembly, comprising the steps of:
a. providing at least one rib and at least one fuel system component at a location distal from the main assembly line of an aircraft wing; and
b. installing the at least one fuel tank system component relative to the at least one rib such that a modular wing portion is formed (e.g., at a location, preferably the same location as in step "a", being distal from the main assembly line), the modular wing portion being a pre-assembled unit for installation into the wing assembly.

The method may comprise providing a plurality of ribs and/or a plurality of fuel system components. The method may comprise the steps of providing a cartridge jig comprising a plurality of secondary support members, installing each rib of the plurality of ribs onto one of the support members, and mounting fuel system components to the plurality of ribs. The fuel system components may be mounted such that each fuel system component passes through the rib plane of some of the ribs, or optionally all of the ribs.

The cartridge jig may comprise any of the features described with respect to the cartridge jig described in the first, second and/or third aspects of the invention.

The cartridge jig may comprise an adjustment mechanism that allows the position of the one or more ribs to be adjusted in position along the length of the removable cartridge jig. The secondary support may be mounted to the adjustment mechanism. The adjustment mechanism may comprise one or more rails running parallel to the length of the cartridge jig. The secondary support may be mounted to the one or more rails of the adjustment mechanism. The secondary support may be mounted between the two rails of the adjustment mechanism. The adjustment mechanism may comprise a first rail and a second rail. A first mounting point of the secondary support may be movably mounted to the first rail and a second, opposite, mounting point of the secondary support may be movably mounted to the second rail. The first mounting point may be located at a first location of the secondary support, corresponding to a first distance along the length of the secondary support, corresponding to a first end of the secondary support. The second mounting point may be located at a second location of the secondary support, corresponding to a second end of the secondary support, the second end being at an opposite end of the secondary support to the first end.

The method may include a first installation step of, installing the ribs to the secondary support. The ribs may be installed to the secondary support by use of a reversible mounting means, for example by use of a suction cup and or use of an alignment pin.

The method may include a second installation step of, after installing the ribs to the secondary support structure and before installing the fuel system components, moving the secondary support structures carrying the ribs along the length of the cartridge jig and spatially arranging them into a predetermined position along the length of the cartridge jig. The second installation step may take place at an assembly station at a location remote from an aircraft wing and/or a main aircraft wing assembly station.

The method may comprise the step of rotating the at least one rib such that the at least one rib is rotated to an upright configuration prior to the step of installing at least one fuel system component to the at least one rib. It may be that the method comprises the step of installing the at least one fuel tank system component at a second station remote from the main assembly line of an aircraft wing, wherein the second station is at a different location to the first station. Such an arrangement may allow for improved/optimum throughput and rate of assembly of the modular aircraft portion such that the modular wing portion can be assembled quickly. It also allows for the operator ergonomics to be improved/optimised at each station. The method may comprise the steps of moving the at least one rib between the first and second station by transporting the ribs on transport assembly as previously described.

The secondary support member may include an actuator, preferably a linear actuator. The secondary support may comprise one or more linear actuators configured to align the at least one rib mounted to said secondary support. The one or more actuators may allow fine adjustments in the alignment of a rib mounted to a secondary support. The method may comprise the step of aligning the ribs mounted to the secondary support into a final position prior to installation into the wing assembly by actuating the actuator.

It may be that a step of testing the modular wing portion is performed after the at least one fuel tank system component is installed relative to the at least one rib and before the modular wing portion is installed into the wing assembly. For example, there may be a step of testing the function of the one or more fuel tank system components when *in situ* relative to the one or more ribs of the modular wing portion before installation in the aircraft wing assembly. This may improve installation procedures and the efficiency of post wing-assembly testing.

It may be that after the step of installing the modular wing portion into the wing assembly, and preferably only after this step, a portion of a lower cover for the wing is installed in a location that extends over and beneath the footprint of (and preferably over the entire footprint of) the modular wing portion.

It should be appreciated that any structural features or spatial arrangements of the ribs, fuel tank components and any apparatus as previously described in the first to fourth aspects of the present invention may also be used in the method of the fifth aspect of the invention.

According to a sixth aspect of the invention there is provided a method of installing a modular wing portion into a wing assembly, the method comprising the steps of providing a modular wing portion as described in the first aspect of the invention or made according to the method of the fifth aspect of the invention and providing a wing assembly as described in to the second aspect of the invention and installing the modular wing portion into the wing assembly.

The modular wing portion may be raised into the wing assembly. Alternatively, the wing assembly may be lowered onto the modular wing portion. The modular wing portion may be moved by a transport assembly configured to install the modular wing portion into the wing assembly.

It should be appreciated that any spatial arrangement of the ribs, fuel tank components and any apparatus as previously described in the first to fourth aspects of the invention, or any method steps previously described in the fifth aspect of the invention may be used in the method of the sixth aspect of the invention.

According to a seventh aspect of the invention there is provided a wing comprising a modular wing portion mounted into a wing assembly, the wing including a modular wing portion as described in the first aspect of the invention or made according to the method of the sixth aspect of the invention, and a wing assembly as described in the second aspect of the invention.

According to an eighth aspect of the invention there is provided an aircraft comprising a wing as described in the seventh aspect of the invention.

The aircraft is preferably a passenger aircraft. The passenger aircraft preferably comprises a passenger cabin comprising a plurality of rows and columns of seat units for accommodating a multiplicity of passengers. The aircraft may have a capacity of at least 20, more preferably at least 50 passengers, and more preferably more than 50 passengers. The aircraft may be a commercial aircraft, for example a commercial passenger aircraft, for example a single aisle or twin aisle aircraft.

It will of course be appreciated that features described in relation to one aspect of the present invention may be incorporated into other aspects of the present invention. For example, the method of the invention may incorporate any of the features described with reference to the apparatus of the invention and *vice versa.*

### DESCRIPTION OF THE DRAWINGS

Embodiments of the present invention will now be described by way of example only with reference to the accompanying schematic drawings of which:
- Fig. 1: shows a cartridge jig frame used to assemble a modular wing portion according to a first embodiment of the invention, with ribs not shown mounted to the cartridge jig;
- Fig. 2: is a schematic drawing showing an aircraft having a wing, the wing including a wing assembly comprising a modular wing portion;
- Fig. 3: is a schematic drawing showing the cartridge jig in an upright position with a plurality of ribs mounted to the cartridge jig via strongbacks;
- Fig. 4: is a schematic drawing showing a wing assembly in a state of partial assembly together with a transport assembly and an elevator supporting the cartridge jig;
- Fig. 5: is a schematic drawing showing the elevator in an extended position such that the cartridge jig is raised into the wing assembly;
- Fig. 6: is a schematic drawing showing one of the strongbacks in more detail;
- Fig. 7: is a schematic drawing showing a detail view of a strongback mounted to a cartridge jig on a rail at a first mounting point;
- Fig. 8A: is a schematic drawing showing the transport assembly with the elevator in an extended position on which a rotatable platform is supported;
- Fig. 8B: is a schematic drawing showing the transport assembly with the elevator in an extended position and the platform rotated;
- Fig. 9: is a schematic drawing of the stations at which the modular wing portions can be assembled and the process floorplan;
- Fig. 10: is a flow chart of a method of assembling a modular wing portion; and
- Fig. 11: is a flow chart of a method of installing a modular wing portion into a wing assembly.

### DETAILED DESCRIPTION

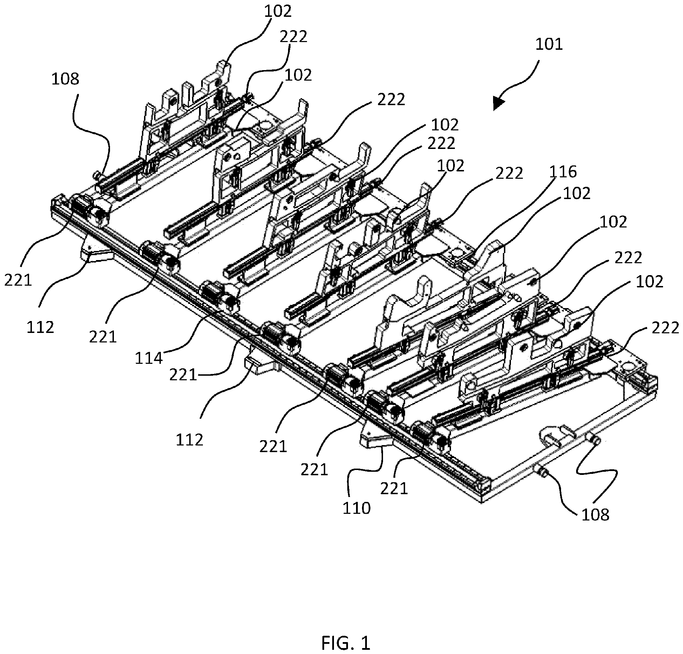

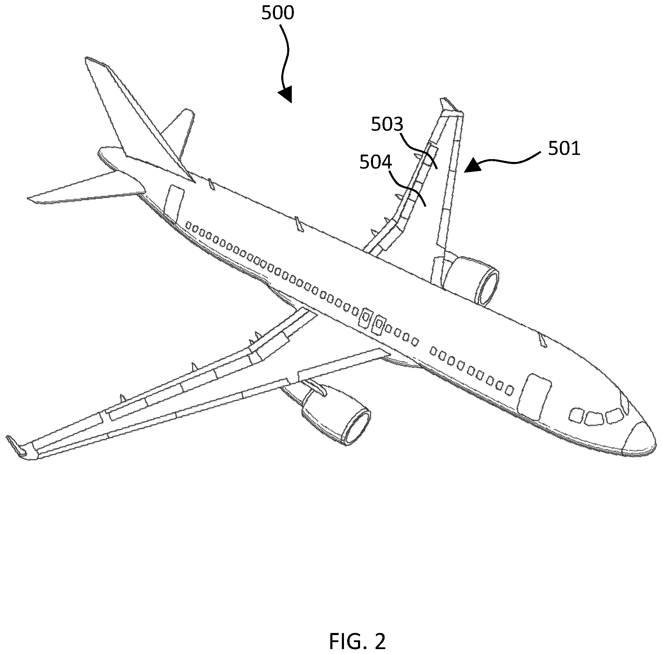

A modular wing portion according to a first embodiment of the invention is capable of being assembled, and subsequently installed using the cartridge jig 101 shown in Fig. 1. A wing 501 of the aircraft 500 shown in Fig. 2, the wing including a wing assembly 503. The wing assembly 503 includes an upper cover portion 504.

A cartridge jig 101 for use in the assembly and installation of a modular wing portion will be described in more detail below. While the cartridge jig 101 does not in this embodiment of the invention comprise any fuel or hydraulic systems as the cartridge jig does not form part of the modular wing portion, or part of the finished wing, it is possible that in some alternative embodiments of the invention where the cartridge jig 101 does form part of the modular wing portion, and thus the finished wing, that fuel systems or the like will be directly mounted in the cartridge jig.

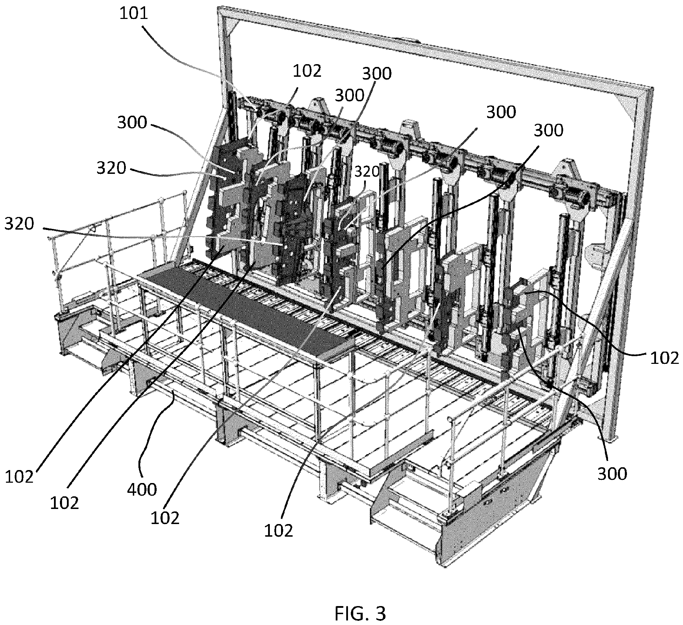

With reference to Fig 1, to the cartridge jig 101 there are mounted a plurality of strongbacks 102. The strongbacks 102 act as secondary support structures for a plurality of ribs that are mounted to the modular wing portion 101 via the strongbacks 102 (not shown). The strongbacks 102 also act to provide a mounting point for the ribs (not shown). The strongbacks 102 are arranged such that any ribs mounted to the strongbacks 102 are mounted in an upright configuration. The strongbacks 102 have a length that extends along the width of the cartridge jig 101, and substantially spans the cartridge jig 101. A configuration of the cartridge jig 101 shown with the ribs attached is shown in Fig. 3.

Cartridge system connections points 108 are present on the outer perimeter of the cartridge jig 101. These cartridge jig system connection points 108 allow control systems that are part of the cartridge jig 101 (such as control of motors, actuators and the like) to be controlled through electrical control signals.

Each of the strongbacks 102 is mounted to the cartridge jig 101 via a pair of rails 114, 116. The rails 114, 116 run parallel to the length of the cartridge jig 101. A first mounting point 221 of each strongback 102 mounts the strongback to the first rail 114 to allow linear movement along the rail. A second mounting point 222 of each strongback 102 mounts the strongback to the second rail 116 to allow linear movement along the rail. The position of the first and second mounting points 221, 222 can be independently controlled, such that the length of each strongback 102 can be held at a non-zero angle relative to the axis corresponding to the width of the cartridge jig 101. In some embodiments of the invention the second mounting point 222 may comprise a pivotable joint.

Fig. 3 shows the cartridge jig 101 in an upright position with a plurality of ribs 300 mounted to the cartridge jig 101 via the strongbacks 102 such that the cassette can be worked from the platform 400. This configuration is an approximate 90° rotation of the cartridge jig and plurality of ribs when compared to the orientation of the ribs when the cartridge jig 101 is stationary on the ground. This allows for better access, with good ergonomics for the operators installing the ribs, with most of the work taking place at or below shoulder height of an operator when compared to known methods of wing manufacture (e.g., working under an aircraft wing and installing the ribs at height above shoulder height).

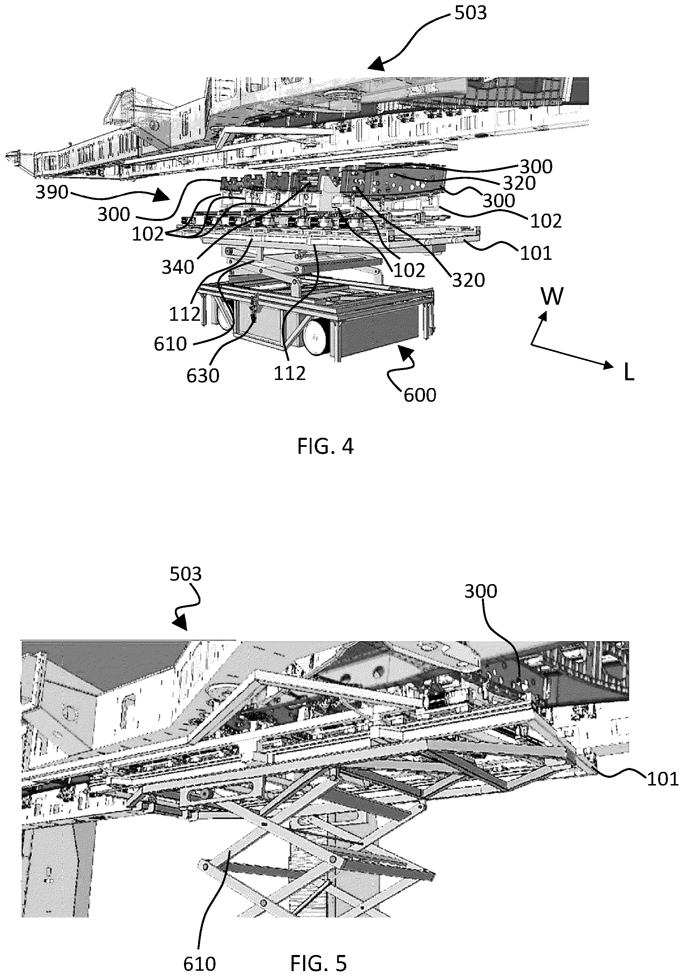

Each rib 300 defines a rib plane bound by an outer edge, and each rib has a plurality of mounting points 320 (only shown in some ribs for clarity) for mounting fuel system components (not shown in this figure). Fuel system components can then be mounted between and through the ribs 300 at the mounting points 320. The fuel system components and ribs being mounted relative to each other forms a modular wing portion 390, which takes the form of a single modular unit that can be installed in a wing assembly 503 as a single piece. Fuel system components are shown mounted to the ribs in Fig. 4.

Fig. 4 shows a wing assembly 503 in a state of partial assembly. A modular wing portion 390 is mounted to a wheeled transport assembly 600 to which the modular wing portion 390 is mounted to via the mounting portions 112. The wheeled transport assembly comprises an elevator 610 which can be used to raise or lower the modular wing portion 390 such that the modular wing portion can be installed into the wing assembly 503. There is also a latch 630 that allows a cartridge jig mounted to the elevator 610 to be rotated to a 90° angle relative to the axis at which the elevator 610 can raise or lower the modular wing portion. This allows for the fuel system components to be installed into the modular wing portion in an ergonomic manner, similar to the manner in which the arrangement shown in Fig. 3 allows for ergonomic installation of fuel system components.

In Fig. 4, the modular wing portion 390 is in a horizontal position with a plurality of ribs 300 mounted to the cartridge jig 101 via the strongbacks 102. This configuration is an approximate 90° rotation of the cartridge jig 101 and plurality of ribs 300 when compared to the orientation shown in Fig. 3. At a plurality of mounting points in the plane of a major surface of the ribs 300 are mounting points 320 to which fuel system components 340 are mounted, allowing the fuel system components 340 to be mounted to the cartridge jig 101 along its longitudinal axis L corresponding to the length of the cartridge jig 101. The length of the ribs 300 is substantially aligned to the width of the cartridge jig and the width of the wing assembly 503, though some of the ribs 300 are rotated to be a non-zero angle from the axis corresponding to the width of the cartridge jig 101 though being mounted to the rails 114 such that the first mounting point 221 and second mounting point 222 of a rib are at different locations along the length of the cartridge jig 101, as shown in Fig. 1.

This arrangement allows for ribs 300 to be fitted to the cartridge jig in a first offline station remote from the wing assembly 503. The ribs can then be moved to a second offline station where the fuel system components 340 can be added between the ribs 300. They can then be transferred to the wing assembly 503 for installation as a single module 100.

Fig. 5 shows the elevator 610 in an extended position such that the cartridge jig 101 is raised into the wing assembly 503. Thus, by raising the cartridge jig 101 from the underside of the wing assembly 503, the ribs 300 and fuel system components 340 of the wing module 100 can be installed such that the ribs 300 and fuel system components 340 are installed simultaneously into the wing assembly 503. This advantageously results in the fuel system components being installed along with the ribs, which means no installation of fuel system components between the ribs needs to take place after the ribs have been installed into the wing assembly. Additionally, installation of a plurality of ribs and fuel system components as a single installation action improves the speed at which the wing can be assembled. In the embodiment of Fig. 5, the fuel system components 340 are rigid fuel pipes.

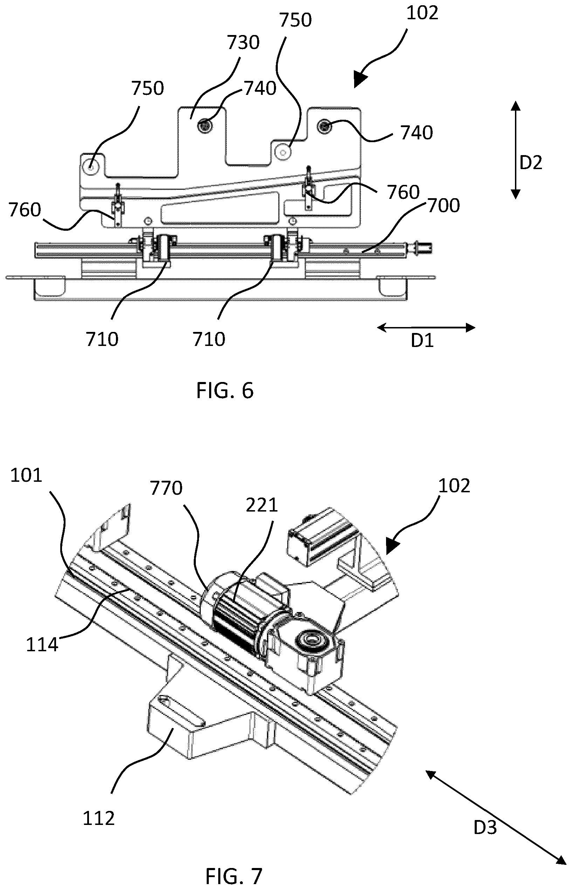

Fig. 6 shows one of the strongbacks 102 in more detail. The strongback 102 is mounted on a rail. A pair of linear actuators 710 allows for fine positioning of the strongbacks (and thus any ribs that they hold) relative to the cartridge jig on which they are mounted and thus allow for fine positioning (e.g., on the order of 0.5 mm) of any ribs mounted to the strongback 102 relative to the modular wing portion in a first direction D1 and a second direction D2 orthogonal to the first direction D1. The strongback comprises an upstand 730 configured to support any rib mounted to the upstand. A pair of suction cups 740 and locating pins 750 are used to hold and align the rib to the support member 102 as the ribs are being installed, and the clamps 760 are then engageable to hold the ribs in place.

Fig. 7 shows a detailed view of a strongback 102 mounted to the cartridge jig 101 on rail 114 at a first mounting point 221. The first mounting point contains an actuator 770 that is configured to actuate movement of the first mounting point 221 along the rail 114 in a linear direction D3. This may allow the first mounting point to be moved along the rail with a tolerance of around 3mm. The actuators 710, 770 and elevator 610 allow for six axis positioning of the ribs relative to the wing assembly 503.

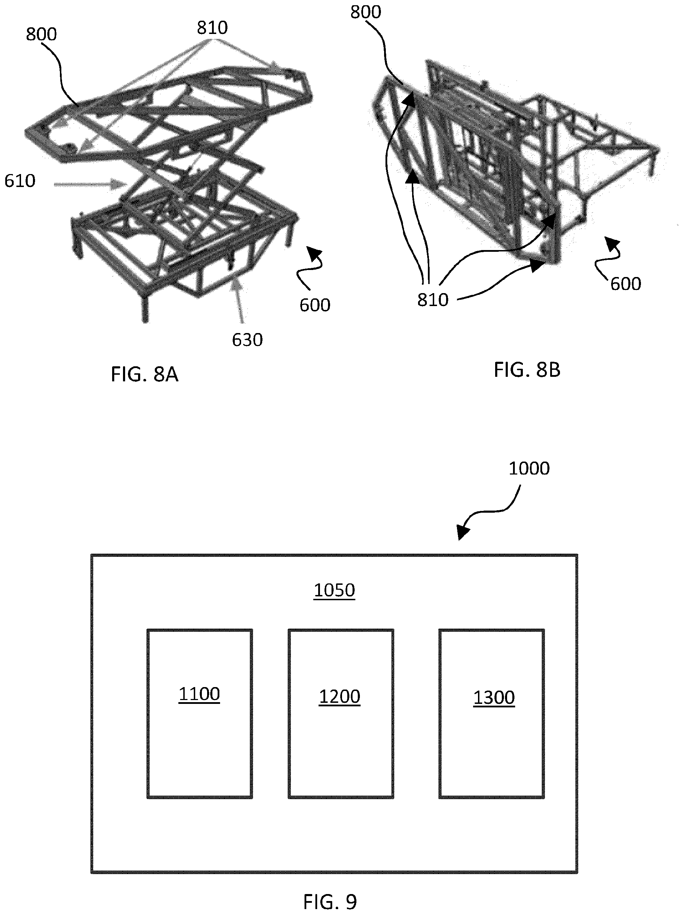

Fig. 8A shows the transport assembly 600 with the elevator 610 in an extended position. The elevator 610 comprises a platform 800 comprising a plurality of mounting points 810 suitable for receiving and mounting a cartridge jig 100. The mounting points 810 are zero-point mounting points. The elevator assembly 600 comprises a latch 630 that allows a cartridge jig mounted to the elevator 610 at the platform 800 to be rotated to a 90° angle relative to the axis at which the elevator 610 can raise or lower the modular wing portion. Fig 8B shows the platform 800 be rotated to a 90° angle relative to the axis at which the elevator 610 can raise or lower the modular wing portion.

Fig. 9 is a schematic drawing of the stations at which the modular wing portions can be assembled and the process floorplan 1000. A manufacturing footprint is at a location 1050, away from the site of final aircraft manufacture (i.e., away from the final assembly line, and therefore "offline"). The manufacturing footprint comprises a first station 1100 where the secondary support structures 102 are distributed along the length of the cartridge jig into their approximate final positions. A plurality of ribs 300 are attached to a cartridge jig 100 via the secondary support structures 102. The cartridge jig is then transported to the second station 1200 and rotated 90° such that better access is allowed. The fuel system components 340 can then be mounted to the cartridge jig between and through the ribs 300 by operators. This arrangement of ribs 300 and fuel system components 340 form the modular wing portion 390. The cartridge jig is then rotated back to its original position and transported to a third station 1300 where the ribs 300 and fuel system components 340 are installed into the main wing assembly 503 by placing the cartridge jig under the main wing assembly 503 and raising the cartridge jig up and into the main wing assembly. Linear actuators 760 enable any final precise adjustments necessary for adjusting the position of the ribs prior to the installation. The systems of the modular wing portion 390 are then connected to the main wing assembly 503. The modular wing portion 390 at this stage is considered to be installed. The suction cups 740 are then released, and the cartridge jig 101 and the elevator 610 are then lowered. By assembling the modular wing portion 390 away from the main wing assembly station 1300, the rate of manufacture of the wing 501 is increased.

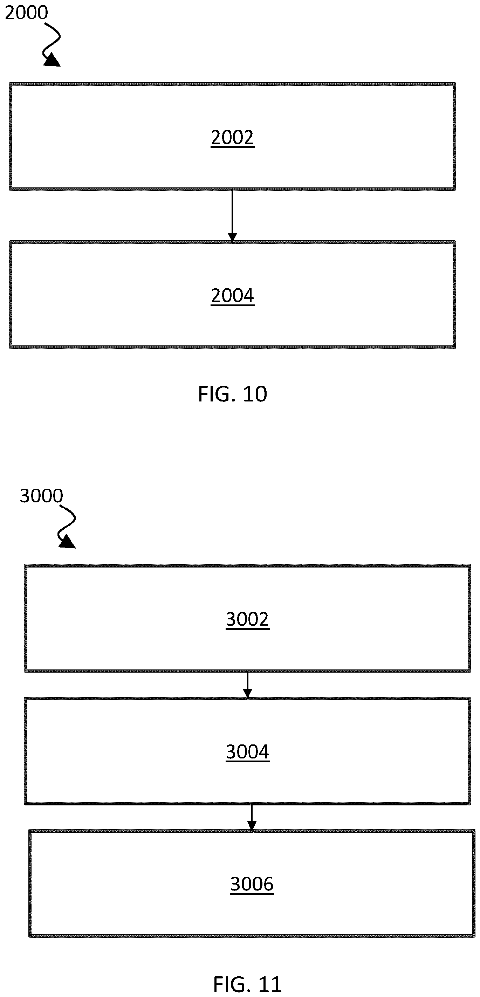

Fig. 10 shows a flow chart depicting an embodiment of a method according to the present invention. Fig. 10 shows a method of assembling a modular wing portion comprising the steps of:
a. providing 2002 at least one rib and at least one fuel system component at a location distal from the main assembly line of an aircraft wing; and
b. installing 2004 the at least one fuel tank system component to the at least one rib such that a modular wing portion is formed, the modular wing portion being a pre-assembled unit for installation into wing assembly.

In some embodiments of the invention the method may further comprise the step of installing a fuel system component at a mounting point of at least one of the ribs. The method may comprise the step of rotating the ribs to an upright configuration prior to the step of installing at least one fuel system component to the at least one rib. It may be that the method comprises the step of spatially arranging the plurality of ribs relative to each other at a first station remote from the main assembly line of an aircraft wing. It may be that the method comprises the step of installing the at least one fuel tank system component at a second station remote from the main assembly line of an aircraft wing, wherein the second station is at a different location to the first station. Such an arrangement may allow for improved/optimum throughput and rate of assembly of the modular aircraft portion such that the modular wing portion can be assembled quickly. It also allows for the operator ergonomics to be improved/optimised at each station. The method may comprise the steps of moving the at least one rib between the first and second station by transporting the ribs on transport assembly as previously described.

Fig. 11 shows a flow chart depicting an embodiment of a method according to the present invention. Fig. 11 shows a method of installing 3000 a modular wing portion into a wing assembly, the method comprising the steps of providing 3002 a modular wing portion and providing 3004 a wing assembly and installing 3006 the modular wing portion into the wing assembly.

In some embodiments of the invention the modular wing portion may be raised into the wing assembly. Alternatively, the wing assembly may be lowered onto the modular wing portion.

Whilst the present invention has been described and illustrated with reference to particular embodiments, it will be appreciated by those of ordinary skill in the art that the invention lends itself to many different variations not specifically illustrated herein. For example, it should be understood that an aspect of the invention is that it provides, in its broadest sense, a modular wing portion wherein at least one rib is mounted to a cartridge jig via at least one secondary support. This aspect of the invention is not itself limited to the types of secondary support or cartridge jigs described above in relation to the embodiments of the invention. The skilled person will be aware of other types of secondary support other than strongbacks which are suitable for use in removably mounting ribs such that ribs and fuel system components can be installed to form a modular wing portion at a location offline from the main assembly line of an aircraft. Additionally, it should be noted that an elevator could take a different form. For example, an elevator could instead be mounted to the wing assembly such that the wing assembly can be lowered onto the modular wing portion.

Moreover, while in the described and illustrated embodiments of the invention illustrated herein the cartridge jig is removable and removed after the modular wing portion is installed, alternative designs are possible where the cartridge jig is instead left in the wing assembly as part of the final assembled wing. In these alternative embodiments, fuel system components may be embedded within, or mounted directly to, the cartridge jig.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

The term 'or' shall be interpreted as 'and/or' unless the context requires otherwise.

## Claims

1. A modular wing portion for installation into a wing assembly as a pre-assembled unit, the modular wing portion comprising at least one rib and at least one internal fuel tank system component.

2. A modular wing portion as claimed in claim 1, wherein the at least one internal fuel tank system component and at least one rib are configured to be spatially fixed relative to each other such that:
a. when the at least one rib is installed into the wing assembly, the at least one fuel tank system component is installed into wing assembly, and
b. when the at least one fuel tank system component is installed, the at least one rib is installed into the wing assembly.

3. A modular wing portion as claimed in claim 1 or claim 2 wherein each rib of the at least one rib has a planar surface defining a rib plane being bounded by an outer rib boundary, wherein the at least one internal fuel tank system component passes through the rib plane, entirely within the outer rib boundary.

4. A modular wing portion as claimed in any preceding claim, wherein the modular wing portion has a length and a width, and wherein the at least one rib is a plurality of ribs distributed along the length of the modular wing portion and wherein each rib has a length, wherein the length of each rib is substantially transverse to the length of the modular wing portion.

5. A modular wing portion as claimed in any preceding claim, wherein each rib has a width, wherein the width of each rib is substantially parallel to the width of the modular wing portion and optionally wherein each rib has a depth, wherein the depth of each rib is substantially perpendicular to both the width of the modular wing portion and the length of the modular wing portion.

6. A modular wing portion as claimed in any preceding claim, wherein the modular wing portion further comprises a removable cartridge jig configured to guide assembly and installation of the modular wing portion, wherein the at least one rib and at least one internal fuel tank system component are removably mounted to the removable cartridge jig, wherein optionally:
i. the removable cartridge jig comprises a connection interface adapted to connect and align the cartridge jig in a predetermined position relative to a wing assembly and or
ii. the removable cartridge jig comprises an adjustment mechanism that allows the position of the at least one rib to be adjusted in position along the length of the removable cartridge jig.

7. A modular wing portion as claimed in claim 6, wherein the at least one rib is/are removably mounted to the removable cartridge jig by a secondary support integrated into the removable cartridge jig wherein the secondary support optionally comprises:
i. one or more actuators configured to align the at least one rib mounted to said secondary support into a final position, and/or
ii. an upstand configured to support at least one rib attached to the secondary support.

8. A modular wing portion as claimed in any preceding claim, wherein the modular wing portion comprises at least 5 ribs.

9. A wing assembly configured to receive the modular wing portion of any preceding claim, the wing assembly optionally comprising a modular wing portion as claimed in any of claims 1 to 8.

10. A cartridge jig for the assembly of a modular wing portion away from an aircraft wing assembly station, the cartridge jig comprising a plurality of secondary support members, each secondary support member configured to receive and support a rib such that a fuel system component can be installed to the rib, wherein the cartridge jig has a length and width and wherein optionally:
a. the plurality of support members are configured to be arranged such that a rib mounted one of the plurality of support members has a length substantially aligned with the width of cartridge jig, and/or
b. the plurality of support members are configured to be arranged such that the plurality of support members are distributed along the width of the cartridge jig

11. A transport assembly configured to install the modular wing portion of any of claims 1 to 8 into the wing assembly of claim 9, wherein the transport assembly comprises a plurality of mounting points for mounting the modular wing portion.

12. A method of assembling a modular wing portion comprising the steps of:
a. providing at least one rib and at least one fuel system component at a location distal from the main assembly line of an aircraft wing; and
b. installing the at least one fuel tank system component relative to the at least one rib such that a modular wing portion is formed, the modular wing portion being a pre-assembled unit for installation into a wing assembly.

13. A method of installing a modular wing portion into a wing assembly, the method comprising the steps of providing a modular wing portion as claimed in any of claims 1 to 8 or made according to the method of claim 12 and providing a wing assembly as claimed in claim 9 and installing the modular wing portion into the wing assembly.

14. A wing comprising a modular wing portion mounted into a wing assembly, the wing including a modular wing portion as claimed in any of claims 1 to 8 or made according to the method of claim 12 and a wing assembly as claimed in claim 12.

15. An aircraft comprising the wing as claimed in claim 14.
